# EUROPEAN PATENT APPLICATION

(11) **EP 2 846 427 A2**
(43) Date of publication of application: **11.03.2015**
(21) Application number: 14183488.7
(22) Date of filing: 04.09.2014
(51) Int. Cl.: H02G 1/08

(54) **Auxiliary device for the introduction of a draw wire in a conduit**

(30) Priority: 04.09.2013 NL 2011383
(71) Applicant: Baens, Antonius Matheus, 6006 LK Weert (NL)
(72) Inventor: Baens, Antonius Matheus, 6006 LK Weert (NL)
(74) Representative: Verhees, Godefridus Josephus Maria

(57) **Abstract**

An auxiliary device 1 which can be coupled to a drilling machine is provided with a channel 5 which is open on one side. The width of the open side of the channel exceeds the thickness of the pulling wire so that the auxiliary device can be mounted over the pulling wire.

A drive wheel is located beside the channel 5 and partly projects into the channel. Opposite to the drive wheel on the other side of the channel is located a movable hold-down roller 21 which also partly projects into the channel during operation. A spring 33 pushes the hold-down roller 21 towards the drive wheel 17.

The auxiliary device 1 further includes a handle 25 for moving the hold-down roller 21 between a retracted position outside the channel 5 and a working position where the hold-down roller 21 partly projects into the channel 5. When the handle is operated also a slide 15 is moved.

## Description

### Field of the invention

The invention relates to an auxiliary device for feeding a pulling wire into an electrical tube.

### State of the art

Feeding a pulling wire into an electrical tube is a time-consuming and labour-intensive operation which is carried out by hand.

### Summary of the invention

It is an object of the invention to provide an auxiliary device for feeding a pulling wire into an electrical tube. For this purpose the auxiliary device according to the invention is characterized in that the auxiliary device comprises a housing which comprises a channel, as well as a drive wheel which is bearing-mounted in the housing beside the channel and whose lateral surface forms a driving surface part of which projects into the channel, and a hold-down roller which is located on the other side of the channel facing the drive wheel, where the lateral surface of the hold-down roller forms a hold-down face also part of which projects into the channel during operation, which auxiliary device further includes a spring which exerts a hold-down force on the hold-down roller in a direction towards the drive wheel, and which auxiliary device further includes coupling means for coupling a drilling machine to the auxiliary device, which drilling machine, after being coupled, can drive the drive wheel. This auxiliary device can be instrumental in mechanically feeding a pulling wire into an electrical tube. An end of the pulling wire is to be fed between the drive wheel and the hold-down wheel and can then be further transported in longitudinal direction via the drive wheel with the aid of the drilling machine.

An embodiment of the auxiliary device according to the invention is characterized in that the coupling means comprise a recess in the housing, as well as a bracket for securing the drilling machine to the recess, where the chuck of the drilling machine is coupled to the shaft of the drive wheel. The auxiliary device is preferably suitable for an angle battery drilling machine where the chuck is positioned at right angles to the longitudinal direction of the handgrip.

A further embodiment of the auxiliary device according to the invention is characterized in that the auxiliary device comprises a handle for moving the hold-down roller between a retracted position outside the channel and a working position where the hold-down roller projects with part of the hold-down face into the channel. While the hold-down roller has adopted a retracted position, it is simpler to feed the pulling wire between the drive wheel and the hold-down roller.

The channel is preferably formed by a slot open on one side in a bottom of the housing, where the slot width on the open side exceeds the thickness of the pulling wire. In consequence, it is not always necessary to feed the end of the pulling wire between the drive wheel and the hold-down roller, but also an arbitrary part of the pulling wire may be fed between the drive wheel and the hold-down roller.

A still further embodiment of the auxiliary device according to the invention is characterized in that the auxiliary device comprises a slide which can partly shut off at least part of the open side of the channel. This avoids the pulling wire being able to leave the channel during operation. The hold-down roller is preferably connected to the slide.

An advantageous practical embodiment of the auxiliary device according to the invention is characterized in that an end of the handle forms a shaft to which the hold-down roller is attached and an end of which shaft is connected to the slide.

A further advantageous practical embodiment of the auxiliary device according to the invention is characterized in that the spring pushes against the handle and the auxiliary device is provided with an adjusting bolt by which the pre-tension of the spring can be adjusted.

### Brief description of the drawings

The invention will be further described below in more detail with reference to an example of embodiment of the auxiliary device according to the invention represented in the drawing figures, in which:
Fig. 1 shows a perspective plan view of an embodiment of the auxiliary device according to the invention coupled to a drilling machine;
Fig. 2 shows a perspective bottom view of the auxiliary device;
Fig. 3 shows a bottom view of the auxiliary device with an open slide;
Fig. 4 shows a bottom view of the auxiliary device with a closed slide;
Fig. 5 shows a plan view of the auxiliary device;
Fig. 6 shows a sectional view of the auxiliary device along line C-C in Fig. 5; and
Fig. 7 shows a sectional view of the auxiliary device along line F-F in Fig. 5.

### Detailed description of the drawings

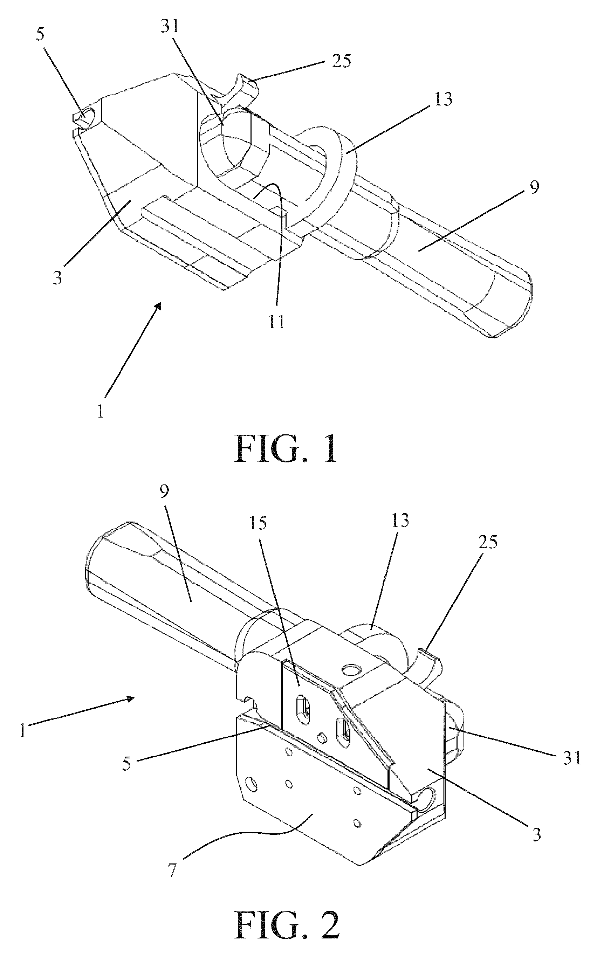

Figs. 1 and 2 show a perspective view of an embodiment of the auxiliary device according to the invention. The auxiliary device 1 comprises a housing 3 provided with a channel 5 open on one side and which is formed by a slot in the under side 7 of the housing. The slot has a width that exceeds the thickness of the pulling wire for mounting the auxiliary device with the channel over the pulling wire.

The auxiliary device 1 further includes coupling means for coupling a drilling machine 9 to the auxiliary device. These coupling means are fomed by a recess 11 in the housing and a bracket 13 for securing the drilling machine to the recess.

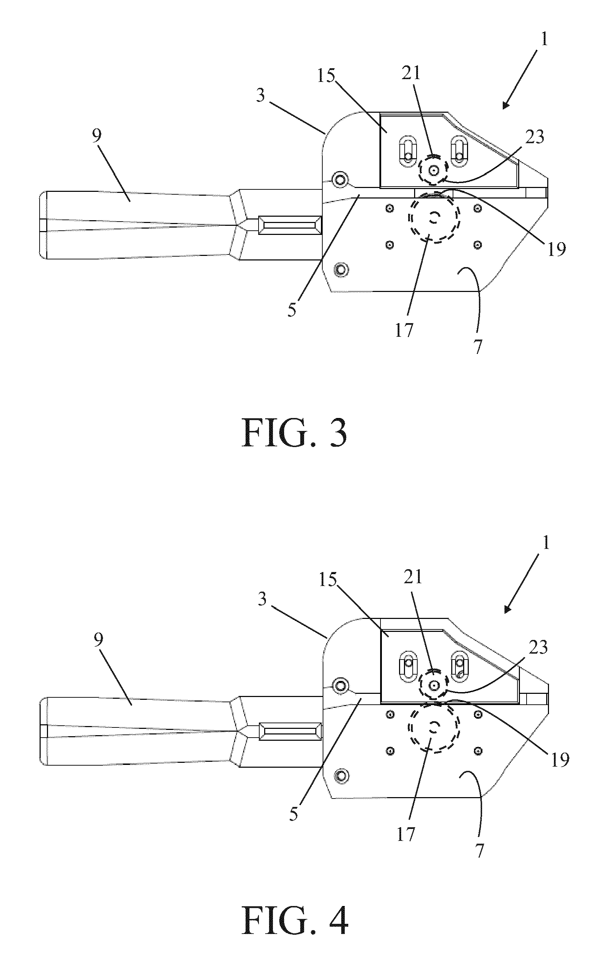

The auxiliary device 1 further includes a slide 15 which can partly shut off at least part of the open side of the channel 5. Figs. 3 and 4 show a bottom view of the auxiliary device 1 with an open state of the slide 15, in which state the auxiliary device can be mounted over a pulling wire, and a closed state respectively, in which the slide 15 shuts off part of the open side of the slot.

The housing 3 accommodates a drive wheel 17 which is bearing-mounted and whose lateral face forms a driving surface 19. This drive wheel is located beside the channel 5 and projects with a part of the driving surface 19 into the channel. On the other side of the channel, facing the drive wheel, there is located a hold-down roller 21 whose lateral face forms a hold-down face 23. During operation also part of the hold-down face 23 projects into the channel (see Fig. 4).

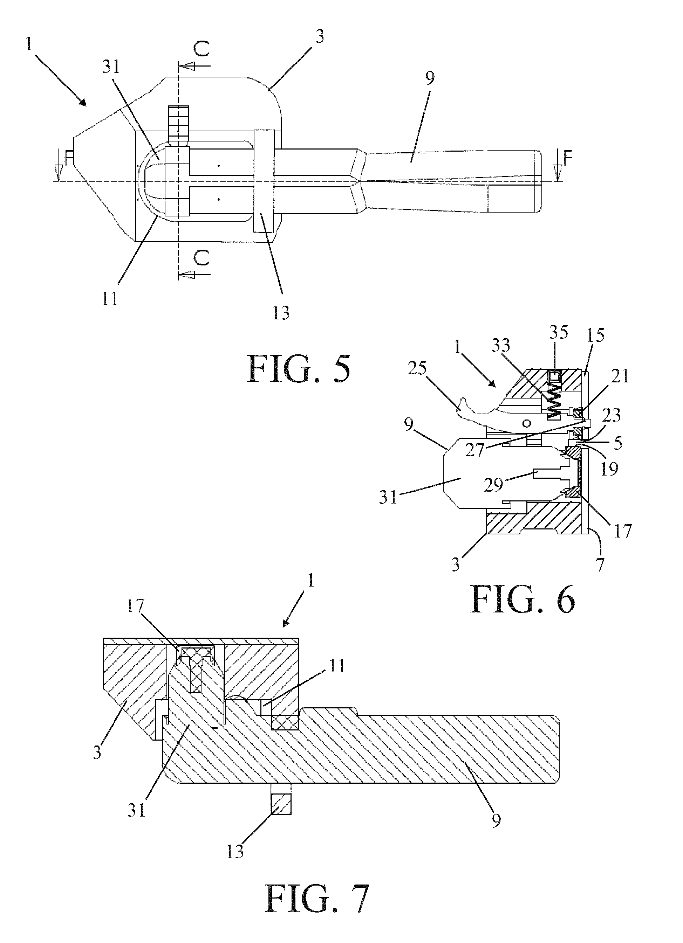

The auxiliary device 1 further includes a handle 25 for moving the hold-down roller 21 between a retracted position outside the channel 5, and a working position in which the hold-down roller 21 projects into the channel 5 with part of the hold-down face 23. This is clearly shown in Figs. 5 to 7. An end of the handle forms a shaft 27 to which the hold-down roller 21 is fitted and which is connected with an end to the slide 15. The shaft 29 of the drive wheel 17 is secured in the chuck 31 of the drilling machine once the drilling machine 9 has been secured to the auxiliary device 1.

The housing 3 further includes a spring 33 which exerts a pressure on the hold-down roller 21 in a direction towards the drive wheel 17. This spring pushes against the handle 25. The auxiliary device 1 is provided with an adjustment bolt 35 by which the pre-tension of the spring 33 can be adjusted.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. An auxiliary device for feeding a pulling wire into an electrical tube, **characterized in that** the auxiliary device comprises a housing which comprises a channel, as well as a drive wheel which is bearing-mounted in the housing beside the channel and whose lateral surface forms a driving surface part of which projects into the channel, and a hold-down roller which is located on the other side of the channel facing the drive wheel, where the lateral surface of the hold-down roller forms a hold-down face also part of which projects into the channel during operation, which auxiliary device further includes a spring which exerts a hold-down force on the hold-down roller in a direction towards the drive wheel, and which auxiliary device further includes coupling means for coupling a drilling machine to the auxiliary device, which drilling machine, after being coupled, can drive the drive wheel.

2. An auxiliary device as claimed in claim 1, **characterized in that** the coupling means comprise a recess in the housing, as well as a bracket for securing the drilling machine to the recess, where the chuck of the drilling machine is coupled to the shaft of the drive wheel.

3. An auxiliary device as claimed in claim 1 or 2, **characterized in that** the auxiliary device comprises a handle for moving the hold-down roller between a retracted position outside the channel and a working position where the hold-down roller projects with part of the hold-down face into the channel.

4. An auxiliary device as claimed in claim 1, 2 or 3, **characterized in that** the channel is formed by a slot open on one side in an under side of the housing, where the slot width on the open side exceeds the thickness of the pulling wire.

5. An auxiliary device as claimed in claim 4, **characterized in that** the auxiliary device comprises a slide which can partly shut off at least part of the open side of the channel.

6. An auxiliary device as claimed in claim 5, **characterized in that** the hold-down roller is connected to the slide.

7. An auxiliary device as claimed in claims 3 and 6, **characterized in that** an end of the handle forms a shaft to which the hold-down roller is attached and an end of which shaft is connected to the slide.

8. An auxiliary device as claimed in claim 7, **characterized in that** the spring pushes against the handle and the auxiliary device is provided with an adjusting bolt by which the pre-tension of the spring can be adjusted.
